# EUROPÄISCHE PATENTSCHRIFT

(11) **EP 0 728 612 B1**
(45) Veröffentlichungstag und Bekanntmachung des Hinweises auf die Patenterteilung: **01.09.2004**
(21) Anmeldenummer: 96106777.4
(22) Anmeldetag: 06.03.1987
(51) Int. Cl.: B60K 41/16, B60K 31/04

(54) **Regeleinrichtung für ein stufenlos einstellbares Getriebe für Kraftfahrzeuge**
Control device for a continuously variable transmission for motor vehicles
Commande pour transmission à variation continue pour véhicules à moteur

(43) Veröffentlichungstag der Anmeldung: 28.08.1996
(62) Teilanmeldung aus: 87103238.9
(73) Patentinhaber: Meyerle, Hannelore, 88074 Meckenbeuren (DE); Meyerle, Martin Peter, 88074 Meckenbeuren (DE); Meyerle, Jürgen, 88074 Meckenbeuren (DE)
(72) Erfinder: Meyerle, Michael, verstorben (DE)
(74) Vertreter: Söllner, Udo, Dipl.-Ing.

(56) Entgegenhaltungen:
- EP-A- 0 069 922
- EP-A- 0 072 631
- DE-A- 2 263 357
- DE-A- 2 652 976
- DE-A- 3 307 629
- DE-A- 3 439 541
- DE-A- 3 606 258
- GB-A- 2 177 765
- US-A- 4 106 367
- US-A- 4 253 347
- US-A- 4 561 327
- US-A- 4 584 907

## Beschreibung

Die Erfindung bezieht sich auf eine Regeleinrichtung für ein stufenlos einstellbares Getriebe, insbesondere für Kraftfahrzeuge, das bevorzugt ausgebildet ist als hydrostatisch-mechanisches Leistungsverzweigungsgetriebe mit einem oder mehreren Fahrbereichen und einer Speisepumpe zur Aufrechterhaltung der Steuer- und Versorgungsdrücke des Getriebes.

Steuer- und Regeleinrichtungen dieser Art sind bereits bekannt durch die DE-A-29 34 270, DE-A-29 34 269, DE-A-27 00 967 und DE-B- 24 42 377. Diese Steuer- und Regeleinrichtungen haben jedoch den Nachteil, daß die Vorzüge des stufenlosen Getriebes nur sehr begrenzt ausgeschöpft werden können.

Eine weitere nach dem US-Patent 4,253,347 bekannte Steuer-und Regeleinrichtung für ein stufenloses hydrostatisch-mechanisches Leistungsgetriebe sieht vor, die Änderungsgeschwindigkeit der Getriebe-Übersetzung über die Fahrzeuggeschwindigkeit zu regeln. Bei dieser Regelungsart ist eine gezielte Motorführung im Gegensatz zur erfindungsgemäß vorgestellten Lösung nicht möglich. Dies gilt auch für die bereits bekannten Steuerungseinrichtungen nach der DE-A-33 076 29 und DE-A-265 2976.

Aufgabe dieser Erfindung ist es, ein hydrostatisch-mechanisches Leistungsverzweigungsgetriebe mit einer RegelEinrichtung auszubilden, welche in Verbindung mit dem Fahrpedal eine gezielte Motorführung zur Verbesserung des von der Motordrehzahl abhängigen Geräuschverhaltens, des Kraftstoffverbrauchs und der Fahrleistung ermöglicht.

Die Aufgabe wird durch die im Hauptanspruch 1 angegebenen Merkmalen gelöst. Weitere vorteilhafte Ausgestaltungen der Erfindung gehen aus den Unteransprüchen und den nachfolgenden Beschreibungen hervor.

Die Erfindung wird an Ausführungsbeispielen anhand von Zeichnungen erläutert. Es zeigen:

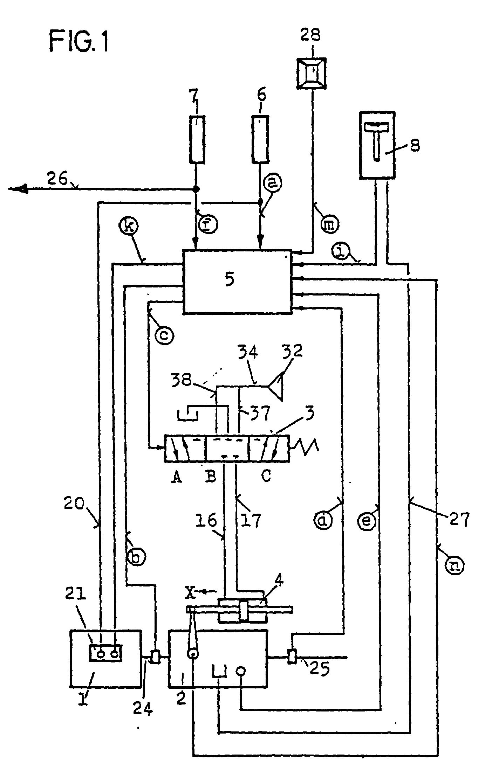

- Fig. 1: eine schematische Darstellung einer Steuer- und Regeleinrichtung, insbesondere mit elektronischer Regeleinrichtung,
- Fig. 2: eine schematische Darstellung einer Steuer- und Regelungseinrichtung mit vorwiegend hydraulischmechanischen Regelungselementen,
- Fig. 3: die schematische Darstellung einer Steuer- und Regelungseinrichtung für ein Getriebe mit mehreren Schaltbereichen,
- Fig. 4: eine weitere Ausführung der Steuerung Regelungseinrichtung für ein Getriebe mit mehreren Schaltbereichen.

In der Stammanmeldung 87103238.9-2306 zu der die vorliegende Anmeldung eine Teilanmeldung ist, ist eine Steuer-und Regeleinrichtung beschrieben, die zum Erreichen eines kontinuierlichen und optimalen Beschleunigungsverhaltens und zur allgemeinen Steigerung der Fahrleistungen eine Einrichtung besitzt, die die Verstellgeschwindigkeit im wesentlichen lastabhangig dosiert, indem die Verstelleistung der Fahrsituation und dem Fahrerwunsch entsprechend im Rahmen der Maximalleistung des Antriebsmotors angepaßt ist.

Dies kann auf verschiedene Art realisiert werden, z.B. durch ein Hochdrucksignal aus dem Hydrostatkreislauf, das entweder den Zulauf zum Verstellmotor 4 vor oder nach dem Hauptregelventil oder den Rücklauf vom Verstellmotor über ein vom Hochdrucksignal geregeltes Drosselventil regelt oder durch entsprechende Modulation des Hauptregelsignals c durch den Einfluß des Hochdrucksignals e, wobei das aus dem Fahrpedalwegsignal a gegebenenfalls Motorkennlinienspeichersignal, Motordrehzahlsignal b resultierendes Differenzsignal c ein Hauptregelventil 3 ansteuert und die Größe der Verstellmenge und damit die Verstellgeschwindigkeit des Verstellzylinders 4 bestimmt. Die Verstellgeschwindigkeit ist dabei so groß, als es das lastabhängige Signal e zuläßt. Ein Beschleunigungsventil 23 sorgt für eine gezielte Verstellölmenge derart, daß z.B. der Rückfluß über die Rücklaufleitung 33 über den Einfluß des Lastsignales e oder / und des Motordrehzahlsignales b oder / und des Abtriebsdrehzahlsignales d entsprechend abgedrosselt wird.

Das Beschleunigungsventil 23 kann beliebig in die Rücklaufleitung 33 oder in die Zulaufleitung 34; 16; 17 geschaltet werden. Das Lastsignal e oder/und die die Drosselgröße bestimmenden Signale b und d sind je nach der jeweiligen Betriebssituation so bemessen, daß während der Motorbeschleunigungsphase kein den Fahrkomfort negativ beeinflußender Zugkrafteinbruch entsteht, d. h. daß in der Zeit des für hohe Leistung erforderlichen Motorhochtourens immer definiertes positives Getriebeabtriebsdrehmoment aufrechterhalten bleibt.

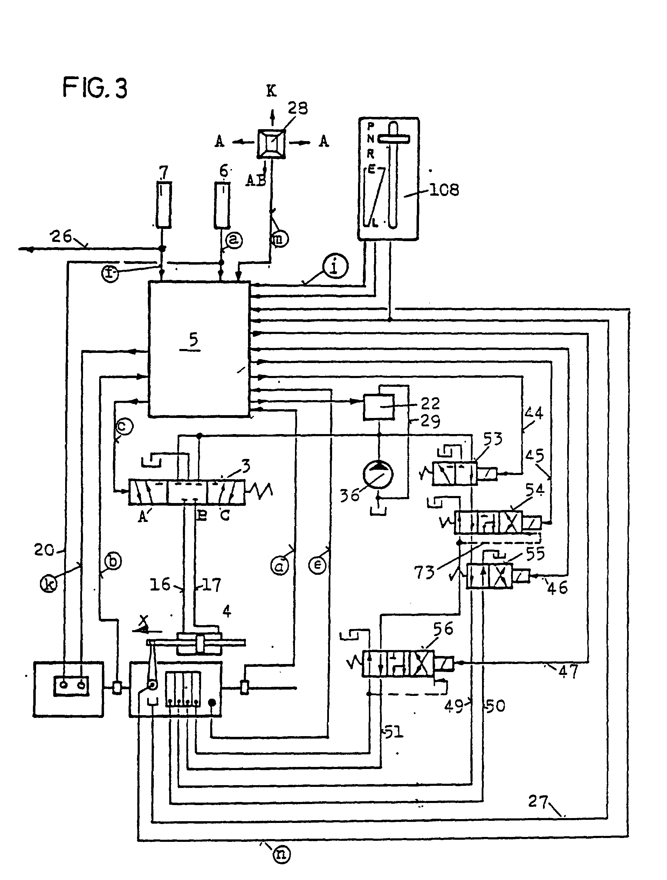

Bei Fahrzeugen mit besonders hohen Komfortansprüchen sieht die Erfindung vor, die Verstellgeschwindig-keitsregelung durch den zusätzlichen Einfluß der Motordrehzahl über das Motordrehzahlsignal b weiter zu verbessern. Dies ist insbesondere dann zweckmäßig, wenn trotzdem noch unangenehme Motorgeräusche auftreten oder ein angenehmerer Motordrehzahlverlauf vorprogrammiert werden soll. Bei derartigen Fahrzeugforderungen kann die vorprogrammierte Drehzahllinie des Motors als Basis für den Soll-lst-Wertvergleich dienen und entsprechend das Differenzsignal c bzw. Regelsignal o beeinflussen. Der vorprogrammierte Motordrehzahlverlauf kann ein kontinuierlicher Verlauf über der Zeit sein, wobei der Zeitparameter einen konstanten oder einen ver änderliehen Wert in Abhängigkeit zur Fahrpedalstellung des Fahrpedalweges oder der Bewegungsgeschwindigkeit des Fahrpedals sein kann. Z.B. kann dem Fahrpedal 6 ein Verzögerungsventil 39 nachgeschaltet werden, das entweder das Signal Fahrpedalwegsignal a oder das bereits modulierte Regelsignal 9 zeitlich verzögert auf das Hauptregelventil 3 einwirken läßt, wobei das Motordrehzahlsignal b früher Einfluß auf das Hauptregelventil 3 nimmt, wodurch zuerst die Ventilfunktion A des Hauptregelventils 3 zur Verkleinerung der Getriebetübersetzung zur Wirkung kommt und dadurch den Motor vor zu schnellem Auftouren beim Gasgeben hindert. Dieselbe Funktion kann auch bei Ausführung nach Fig. 3 erzielt werden durch Verzögerungseinrichtung entsprechende bzw. Verzögerungsprogramm im Hauptregelgerät 5, was hier auf elektronischem Weg verwirklicht wird und das Differenzsignal c entsprechend beeinflußt.

Anstelle des Hauptregelventils 3 und des Differenzsignals c sind verschiedene Arten von Verstellsystemen anwendbar. Zum Beispiel ist alternativ eine an sich bei Hydrostatverstellungen bekannte, in den Zeichnungen nicht dargestellte, Proportionalverstellung vorgesehen, bei der das Regelsignal c durch ein der Getriebeübersetzung entsprechendes proportionales Signal ersetzt wird. Bei Anwendung eines leistungsverzweigten Mehrbereichsgetriebesystems werden die Signale nach jeder Bereichsschaltung in umgekehrte Richtung geändert entsprechend der Verstellcharakteristik des Hydrostaten über den gesamten Übersetzungsbereich des Getriebes.

Als weitere Alternative kann, wie ansich bekannt, ein doppelseitig angesteuertes Magnetventil als Hauptregelventil dienen, das vom Hauptregelgerät 5 anstelle des Differenzsignals c jeweils den Verstellimpuls wechselweise über zwei Signalleitungen in die eine oder andere Verstellrichtung erhält.

Das stufenlose Getriebe mit, für die Verbrauchsoptimierung notwendigem großen Overdrivebereich, hat den Nachteil, daß die Motorbremsfähigkeit schwieriger genutzt werden kann als bei Stufengetrieben bzw. Getrieben ohne oder kleinem Overdrivebereich. Dies liegt darin begründet, daß die Regeleinrichtung immer so ausgelegt ist, daß der Motor auf kleinstmögliche Drehzahl hinsichtlich günstigem Verbrauch geht, wodurch über die entsprechend kleine Getriebeübersetzung nur wenig Bremsmoment über den Getriebestrang auf die Triebräder zur Wirkung kommt.

Zur Beseitigung dieses Problems ist eine spezielle Einrichtung vorgesehen, die es ermöglicht, die Motorbremsfähigkeit in möglichst hohem Maße in fahrzeuggerechter und fahrerfreundlicher Form nutzbar zu machen. Für diesen Zweck ist eine Übersetzungssperreinrichtung 35 vorgesehen. Beim Bremsen wirkt die Getriebeübersetzung über die normale Getrieberegelung mit einem gewissen Motorbremsanteil durch den Einfluß des Bremssignals f auf die Regeleinrichtung 3, 4. Nach Loslassen der Bremse kann sich nun aufgrund dieser Einrichtung die Verstellung nicht mehr in Richtung kleiner Übersetzung ändern, wie dies bei bekannten Regeleinrichtungen der Fall ist, sondern die Übersetzung wird beim Loslassen der Bremse in eine Verstellrichtung blockiert, so daß der Motor in der entsprechend hohen Drehzahl gehalten wird. D.h. daß nach dem Bremsen der Übersetzungszustand beibehalten bleibt und zwar dadurch, daß beim Loslassen der Bremse ein Signal ausgelöst wird, daß das Verstellorgan 4 vorzugsweise in eine Verstellrichtung und zwar in Richtung kleiner Übersetzung festhält. Dies geschieht durch ein vorzugsweise zwischen Verstellmotor 4 und Hauptregelventil 3 geschaltetes Sperrventil 10, das direkt oder über einen mit der Bremseinrichtung in Verbindung stehenden Schalter 11 angesteuert wird. Der Übersetzungszustand bleibt so lange ganz oder in Richtung kleiner Übersetzung blockiert, so lange keines der beiden Pedale - Bremspedal oder Fahrpedal-betätigt werden. Bei nochmaligem Betätigen der Bremse bleibt das Sperrventil 10 in Sperrstellung, wobei der Verstellmotor in Richtung großer Übersetzung X weiter verstellbar ist, indem über eine Steuerleitung 15 und einem Rückschlagventil 12 der Weg zum Rücklauf über die Funktionsstellung C des Hauptregelventils 3 freigibt.

Bei Betätigen des Gaspedals bzw. Fahrpedals 6 wird die Sperrfunktion der Übersetzung aufgehoben und die normale automatische Getrieberegelung freigegeben. Jetzt kann der volle Übersetzungsbereich in beiden Richtungen wieder automatisch ausgenutzt werden.

Das Rückschlagventil 12 sowie das Sperrventil 10 können baulich zu einer Einheit zusammengefaßt werden und wahlweise funktionsgleich in eine der beiden Steuerleitungen 16, 17 angeordnet werden.

Die Übersetzungssperrfunktion kann bei einer überwiegend elektronischen Auslegung der Steuer- und Regelungseinrichtung auch im elektronischen Regelgerät 5 mit integriert werden. In diesem Fall löst das Bremssignal Wegsignal f eine Übersetzungssperrfunktion aus, indem z.B. durch einen Soll-lstwertvergleich das Verstellsignal n konstant bzw. bei Verstellbestrebungen in Richtung kleiner Übersetzung konstant gehalten bleibt und das Differenzsignai c zur Ansteuerung des Hauptregelventils 3 entsprechend moduliert wird. Bei Betätigen des Fahrpedals 6 wird die Sperrfunktion aufgehoben, um die normale Fahrregelfunktion wieder inkraft zu setzen.

In Richtung großer Übersetzung ist die Sperrwirkung außerkraft und zwar deswegen, damit für den Fall, daß nun wieder Zugkräfte gefordert werden entsprechend dem unterschiedlichen Fahrprofil (Steigung) der Fahrregelung der Weg zur Verstellung in Richtung großer Übersetzung freigegeben ist ohne das Fahrpedal 6 betätigen zu müssen. Zweckmäßigerweise ist eine Sicherheitseinrichtung vorgesehen, die die Übersetzungssperrfunktion auch dann ausschaltet, wenn der Motor zu stark hochgetourt wird, insbesondere dann, wenn der Fahrer bei zu starkem Gefälle eine zusätzliche Bremsung über die Betriebsbremseinrichtung unterläßt. Die Aufhebung der Übersetzungssperre erfolgt in diesem Fall über das Motordrehzahlsignal b ab einer entsprechenden Grenzdrehzahl.

Die Übersetzungssperreinrichtung hat besondere Bedeutung für Fahrzeuge, die mit sehr hohem Overdrivebereich ausgestattet sind zur Ausnutzung des Kraftstoffeinsparungspotentials des Motors, was insbesondere beim PKW hohen Wirtschaftlichkeitseffekt hat.

Zur Verbesserung des Getriebewirkungsgrades hat ein Druckmodulator 22 die Aufgabe, den Steuer-und Versorgungsdruck des Getriebes entsprechend den Lastzuständen bzw. den Betriebszuständen des Fahrzeugs anzupassen. Bei herkömmlichen Steuerungssystemen muß der Steuer-und Versorgungsdruck verhältnismäßig hoch sein, um für jede Betriebssituation ausreichend Druck zur Verfügung zu haben. Dies bedeutet, daß bei Fahrzuständen mit niedrigen Beanspruchungen, d. h. im Teillastbereich, unnötig hohe Pumpenleistung aufgewendet werden muß, was den Wirkungsgrad des Getriebes unnötig verschlechtert.

Diese unnötigen Leistungsverluste zu beseitigen, ist der Hauptaspekt dieser Erfindung, die erfindungsgemäß durch diese Druckmodulation gelöst wird.

Erfindungsgemäß wird eine Regeleinrichtung für ein stufenlos einstellbares Getriebe, insbesondere für Kraftfahrzeuge, das bevorzugt ausgebildet ist als hydrostatisch-mechanisches Leistungsverzweigungs-getriebe mit einem oder mehreren Fahrbereichen und einer Speisepumpe (36) zur Aufrechterhaltung der Steuer- und Versorgungsdrücke des Getriebes derart ausgebildet, daß der Steuer- oder Versorgungsdruck des Getriebes durch ein oder mehrere veränderliche Betriebssignale modulierbar ist.

Durch ein lastabhängiges Signal e wird der Steuerdruck und Versorgungsdruck für das gesamte Getriebe entsprechend den Lastzuständen insbesondere entsprechend den Zugkraftgrößen angepaßt. Für stufenlose Getriebe mit einem hydrostatischen Wandler müssen die Hydrostatkomponenten bei hoher Drehzahl trotz niedrigem Drehmoment mit entsprechend hohem Speisedruck versorgt werden. Für diesen Zweck sieht die Erfindung einen zusätzlichen Einfluß durch ein Motordrehzahlsignal b auf das Druckmodulationsventil 22 vor, wodurch der aus dem Lastsignal e resultierende Steuerdruck bzw. Speisedruck durch das Drehzahlsignal b übersteuert wird bzw., daß das Drehzahlsignal b dem Lastsignal e aufsummiert wird. Auf diese Weise sind alle Betriebssituationen abgesichert und es wird der Vorteil ausgeschöpft, daß in dem überwiegenden Teillastbetrieb Verlustleistungen aus der Steuer-und Speiseölversorgung auf ein Mindestmaß reduziert werden. Mit den Ziel, die Versorgungsölmenge auf ein Mindesmaß zu reduzieren, wird über eine mit der Speisepumpe 36 und dem Druckmodulationsventil 22 in Verbindung stehende Bypaßleitung 29, wie ansich bereits bekannt bei Automatgetrieben, die überflüssige Ölmenge direkt der Ansaugleitung der Speisepumpe 36 zugeführt. Hiermit wird desweiteren erzielt, daß die Ölsumpfmengen verringert werden können und Luftzutritt, was zu hohen Ölaufschäumungen führt, verhindert wird.

Zur Optimierung der Beschleunigungsfähigkeit bzw. zur spontanen Ausschöpfung hoher oder maximaler Motorleistung, insbesondere für sportliches Fahren oder zur Vorbereitung des Motors auf eine schnelle Beschleunigung, z.B. für einen Überholvorgang, ist eine Einrichtung vorgesehen. die es erlaubt, den Motor vor der Beschleunigungsphase auf höhere Drehzahl anzuheben, um bei Beschleunigungsbeginn rasch die volle Motorleistung zur Verfügung zu haben. Durch Knopfdruck oder andere Betätigung, z.B. durch Antippen des Wählhebels 8; 108 oder einer irgendwie gearteten Fuß-oder Handbetätigungseinrichtung wird diese Funktion abgerufen, indem kurzzeitig eine Abweichung von der Verbrauchsbestlinie des Motors auf eine Er satzlinie (Sportprogramm), die je nach Ausgangssituation und Motorcharakteristik unterschiedliche Abweichung von der Verbrauchsbestlinie des Motors haben kann, bewirkt wird. Die Getriebeübersetzung wird dabei automatisch auf ein vorprogrammiertes Maß vergrößert. Bei Abruf dieser Funktion wird das Differenzsignal c durch den zusätzlichen Einfluß des dieser Funktion zugeordnetem Signals i so verändert, daß bei nahezu gleichbleibender Gaspedalstellung bzw. Fahrpedalstellung, Fahrgeschwindigkeit und Motorleistung die Motordrehzahl angehoben wird bis Erreichen der Ersatzlinie. Je nach fahrzeugspezifischen Ansprüchen können mehr oder weniger genaue Werte vorgegeben bzw. vorprogrammiert werden. Z.b. kann ein konstanter Wert als Signal i, das direkt auf das Hauptregelventil 3 wirkt oder in den elektronischen Fahrregler 5 eingegeben wird und bei Abruf der Funktion sofort die Verstelleinrichtung 3, 4 ansteuert. Anstelle des Ersatzprogrammes ist eine individuelle Hochführung des Motors durch den Fahrer möglich, indem z.B. die Wähleinrichtung 108 (Fig. 3) so ausgebildet ist, daß durch Einfluß des Fahrers die Übersetzung beliebig verändert werden kann innerhalb der beiden Stellungen E und L. Bei Stellung E(ECONOMI) ist die normale Vorwärtsfahrstellung gewählt. In dieser Stellung ist der gesamte Übersetzungsbereich verbrauchsoptimal nutzbar. Die Wähleinrichtung 108 ist so ausführbar, daß nach geringfügiger Verstellung in Richtung L, der durch einen Rastendruck spürbar ist, das Ersatzprogramm eingeschaltet bzw. der Overdrivebereich ausgeschaltet werden kann, im Hinblick auf leistungsorientierte Fahrweise. Durch Bewequng des Wählhebels in weitere Zwischenstellungen in Richtung L kann stufenlos die Übersetzung limitiert werden oder diese Einrichtung zur gezielten Hochführung des Motors z.B. für eine Vorbereitung des Motors auf einen Überholvorgang, was für eine außerordentlich sportliche Fahrweise genutzt werden kann. Über das Signal i, z.B. durch einen Potentiometer oder eine entsprechende mechanische Einrichtung, wird für diesen Zweck eine entsprechende Signalgröße in das Fahrgerät 5 eingegeben, wodurch das Differenzsignal c unter Zusammenwirken mit dem Verstellwegsignal n oder Drehzahlvergleich zwischen Antriebsdrehzahlsignal b und Abtriebsdrehzahlsignal d moduliert wird. Hierbei wird durch das Steuersignal i die Größe des Verstellwegsignals n bzw. das Übersetzungssignal festgelegt, woraus das Differenzsignal c bzw. Regelsignal resultiert und dafür sorgt, daß über die Verstelleinrichtung 3, 4 die vorgewählte Übersetzung eingehalten wird. Der Abruf des Ersatzprogrammes bzw. der leistungsorientierten Funktion kann durch weitere andere Einrichtungen abgerufen werden, z.B. durch einen Wählhebel am Lenkrad oder im Bereich des Gaspedals für eine Fußbetätigung angeordnete Betätigungseinrichtung, was beispielsweise durch eine Querbewegung des Fußes über das Vorwählsignal i beliebig ausgelöst werden kann. Die Gaspedalstellung kann bei Abruf dieses Signals i beibehalten werden, wobei der Motor bei gleicher Regelsteilung des Motorreglers 21 bleibt und durch die übersetzungsänderungsbedingte Drehmomentabsenkung auf die entsprechend höhere Drehzahl ansteigen kann, wobei die Motorleistung während dieses Vorganges weitgehend konstant bleibt. Zweckmäßigerweise soll diese Einrichtung so ausgebildet werden, daß nach einmaligem Abruf dieser Funktion und Ablauf des gewählten Programmes das normale verbrauchsorientierte Programm automatisch oder auf einfache Weise manuell zurückgerufen wird. Die angesprochenen Wähleinrichtungen am Lenkrad bzw. im Bereich des Gaspedals sind in den Zeichnungen nicht dargestellt.

Zur Steigerung des Bedienungskomforts ist eine Geschwindigkeitsregelung vorgesehen, wie sie ansich bereits bei Stufengetrieben bekannt ist. Mit dieser Einrichtung kann die gewünschte Fahrgeschwindigkeit ab einer gewissen Geschwindigkeitsgröße konstant gehalten und auch gespeichert werden. Ein Wählhebel, der z.B. in Lenkradnähe angebracht werden kann, kann dazu dienen, die Funktionen K (Konstant) oder A (Aus) oder AB (Abruf) abzurufen. Über das Signal m wird der Fahrelektronik 5 der Fahrerwunsch eingegeben. Bei kurzer Betätigung des Hebels in Richtung K wird die momentane Geschwindigkeit beibehalten. Bei Bewequng in Richtung A wird die Geschwinigkeitsregeleinrichtung ausgeschaltet, bei Bewegung in Richtung AB kann die zuletzt einprogrammierte Geschwindigkeitsgröße wieder abgerufen werden. Diese Wähleinrichtung ist beliebig ausführbar und kann auch über verschiedene z.B. Schaltknöpfe in bedienungsfreundlicher Weise ausgebildet werden. Über das Geschwindigkeitseingabesignal m wird das Konstantfahrtsignal bzw. Abtriebsdrehzahisignal d festgelegt.

Über einen Vergleich des Eingabesignals m und diesem Abtriebsdrehzahlsignal d wird abhängig vom jeweiligen Fahrwiderstand das Motorregelsignal k gebildet und über den Motorregler 21 dem Motor die entsprechende Leistung abgefordert, die dieser vorgewählten Konstantgeschwindigkeit entspricht. Über das Motordrehzahlsignal b wird gleichzeitig im Fahrregler 5 das Differenzsignal c gebildet und zwar derart, daß ständig die verbrauchsoptimale Getriebeübersetzung sowie die verbrauchsoptimale Drehzahl des Motors b eingestellt wird. Dafür sorgt eine im Fahrregler 5 integrierte Vergleichseinrichtung zwischen Motorregelsignal, dessen Signalgröße immer eine Größe der abgerufenen Motorleistung darstellt, und dem Motordrehzahlsignal b in Zusammenwirkung mit dem im Fahrregler 5 integrierten Motorkennlinienfeld, woraus das Differensignal c resultiert und die Verstelleinrichtung 3, 4 entsprechend ansteuert. Bei unterschiedlichem Fahrwiderstand durch unterschiedliches Streckenprofil werden mehr oder weniger große Leistungen gefordert, um die Konstantgeschwindigkeit zu halten. Die beschriebene Regelung paßt sich diesen Gegebenheiten an, indem eine möglicherweise ständige Veränderung der Übersetzung und der Motordrehzahl stattfindet. Z.B. bei steigendem Fahrwiderstand aufgrund einer Steigung wird zunächst die Motordrehzahl gedrückt, was im Fahrregler 5 gleichzeitig durch den Vergleich mit dem Abtriebsdrehzahlsignal d eine Vergrößerung des Motorregelsignals k bewirkt, um höhere Leistungen abzu-Verstellgeschwindigkeit der Verstelleinrichtung 3, 4 überfordert wird. Bei Betätigen des Bremspedals signalisiert das Bremspedalwegsignal f die Aufhebung der Geschwindigkeitsregelfunktion. Nach Loslassen des Fahrpedals bzw. des Bremspedals pendelt sich automatisch die vorgewählte Konstantgeschwindigkeit wieder ein.

Durch Festhalten der Betätigungseinrichtung in Schaltstellung K beschleunigt das Fahrzeug ohne Gasbetätigung, nach dem Loslassen wird die erreichte Geschwindigkeit gehalten und gespeichert. Die Geschwindigkeitsregelung wird ausgeschaltet bei Schaltbetätigung in Richtung A (Aus), bei Betätigung in Richtung AB (Abruf) wird die zuletzt gespeicherte Geschwindigkeit wieder erreicht. Über das Geschwindigkeitsregelsignal m werden die entsprechenden Signale in die Fahrregelung 5 eingebracht.

Bei dem hydrostatischen stufenlosen Leistungsverzweigungsgetriebe ist die Hydrostatik mit einem Einspeise- und Spülventil ausgerüstet, das es erlaubt, daß nahezu die gesamte Speiseölmenge in den Hydrostatkreislauf eingespeist wird, um hohe Kühl- und Spülwirkung des Hydrostatkreislaufes zu bewirken. Bei dieser, in den Zeichnungen nicht dargestellten Ausführungsform, wird zweckmäßigerweise das Hydrostatgetriebe unmittelbar nach dem Druckmodulationsventil 22 über die Steuerleitung 34 angeschlossen.

Die von den Verbrauchern, Steuer-und Regelungseinrichtung, sowie Kupplungssteuerung und für die Schmierung, nicht benötigte Ölmenge wird, wie ansich bekannt, direkt oder indirekt über Kühler oder Filter der Saugleitung der Versorgungspumpe 36 zugeführt, um den Luftzutritt auf ein Mindestmaßzu senken.

Zur Erzielung guter Beschleunigungswerte unmittelbar nach dem Gasgeben bzw. bei Betätigen des Fahrpedals bei gleichzeitigem kontinuierlichen Beschleunigungsverlauf sorgt ein vorprogrammierter bzw. vorgegebener über einen Zeitparameter festgelegter Verzögerungswert, der dazu dient, eine zu schnelle Üersetzungsrückstellung des Getriebes und somit zu schnelles Hochtouren des Motors, z.B. in Form eines zu starken kick-down-Effektes zu verhindern. Dieser Verzögerungswert kann einen linearen oder nichtlinearen verlauf über dem Zeitparameter aufweisen und in Abhängigkeit zur Fahrpedalbewegung unterschiedlichen Verlauf haben. Je nach Fahrzeugforderung, die abhängig von der Fahrzeugleistung und der Art des Fahrzeuges, z.B. sportliches Fahrzeug oder Tourenfahrzeug, sehr unterschiedlich sein kann, ist ein mehr oder weniger schnelles Hochtouren des Motors zulässig, was zu einer entsprechend unterschiedlichen Auslegung des Verzögerungswertes führt. Die Verzögerungseinrichtung 39 kann in der Elektronik fest einprogrammiert werden und zwar derart, daß das dem Motorkennlinienspeicher nachgeordnete Signal 9 entsprechend beeinflußt wird, das mit entsprechender zeitlicher Verzögerung auf die Verstelleinrichtung wirkt.

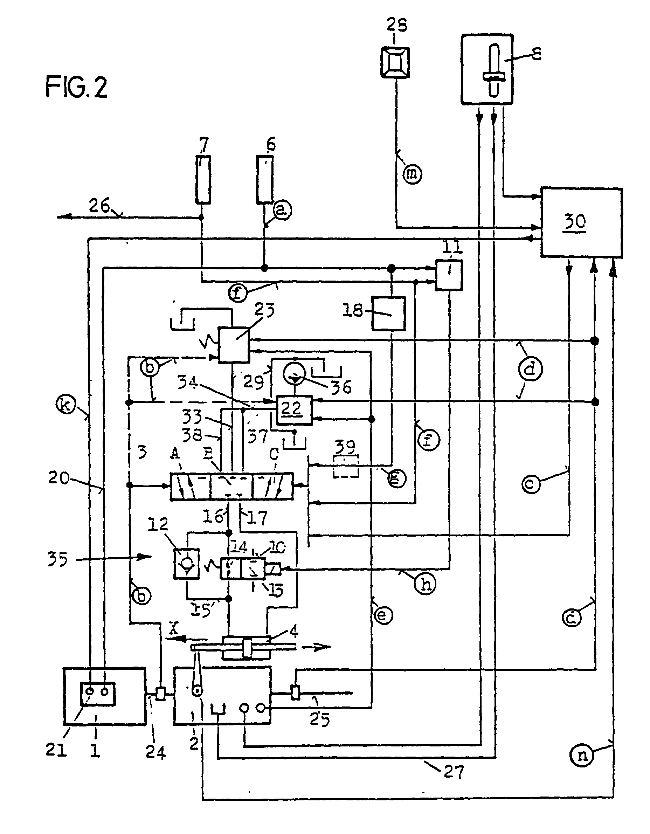

Als Verzögerungseinrichtung 39 kann auch, wie in Fig. 2 dargestellt, ein einfaches Verzögerungsventil in Form eines Dämpfungsventiles, z.B. auf hydraulischem Weg, das direkt zwischen die Signalleitung 9 geschaltet ist, dienen.

Im Hinblick auf ein sehr wirkungsvolles Anfahrverhalten ist diese Verzögerungseinrichtung 39 so ausgelegt, dass z.B. für eine optimale Startfähigkeit des Fahrzeugs das Getriebe nach Loslassen des Bremspedals 7 und spontanem Gasgeben das Getriebe in Abhängigkeit zum Abfall des Bremspedalsignals f und des Motordrehzahlsignals b schnell verstellt auf eine Üersetzungsgröße, die der maximalen Leistungsgröße des Motors enspricht. Durch den Einfluß der Verzögerungseinrichtung 39 kann die Signalgröße 9 erst entsprechend später auf die Verstellung einwirken und zwar dann, wenn die Beschleunigungsphase abgeschlossen ist, um den Motor danach auf die Verbrauchsbestlinie zu führen, die im Motorkennlinienspeicher 18 vorgegeben ist.

Ferner ist eine Einrichtung zur Limitierung der Getriebeübersetzung vorgesehen. Zweck dieser Einrichtung ist es, konstante Getriebeübersetzungen stufenlos vorwählen zu können, was durch die Wähleinrichtung 108 möglich ist. Zwischen den beiden Wählstellungen E und L kann beliebig die gewünschte Übersetzung eingestellt werden. Das Übersetzungssignal wird durch das Signal i in das Hauptregelgerät bzw. Fahrregler 5 eingegeben, wobei über das Signal n die Übersetzungsstellung kontrolliert wird. Vorzugsweise ist die stufenlos einstellbar Übersetzungslimitierung auf einen Hauptbetriebsbereich begrenzt.

Für ein Getriebe mit mehreren Fahrbereichen mit z.B. einem hydrostatischen Wandler in Verbindung mit Leistungsverzweigung muß der Hydrostat mehrmals innerhalb seinem positiven und negativen Verstellbereich durchfahren werden. Für diesen Fall ist eine Bereichsschaltung vorgesehen, die über Steuerventile 53, 54, 55 und 56 abwechselnd mehrere Bereichskupplungen über die Steuerleitungen 50, 49, 51 und 52 ansteuert (Fig. 3). Die Steuerventile werden hierbei über die Fahrelektronik bzw. rufen und gleichzeitig das Differenzsignal c verkleinert, um das Hauptregelventil 3 in Funktionsstellung C zu führen, wodurch der Servomotor 4 in Pfeilrichtung X verstellt wird. Die Verarbeitung der einzelnen Signale kann in der Eiektronik auf, in ansich bekannter Weise, realisiert werden.

Die vom Fahrer vorgewählte Konstantfahrgeschwindigkeit wird geändert bzw. ausgeschaltet:
a) durch entsprechende Betätigung des Fahrers,
b) wenn die Maximalleistung des Motors überfordert wird,
c) wenn eine Übersteuerung durch das Gas bzw. Fahrpedal 6 vorgenommen wird,
d) wenn zu starke Verzögerung, z.B. durch eine extreme Steigung auftritt,
e) wenn das Bremspedal 7 betätigt wird.

Diese Änderungen sind teilweise aus Sicherheitsgründen erforderlich. Bei Erreichen der Grenzleistung des Motors stellt sich automatisch eine der Leistung entsprechende niedrigere Geschwindigkeit ein. Bei Betätigen des Fahrpedals 6 wird das Motorregelsignal k übersteuert, um höhere Leistungen abzurufen entsprechend dem neuen Geschwindigkeitswunsch des Fahrers. Bei Loslassen des Gaspedals stellt sich erneut die vorgewählte Konstantgeschwindigkeit wieder ein. Bei Auftreten plötzlicher zu starker Steigung, d.h. zu großer Verzögerung wird ebenfalls die Geschwindigkeitsregeleinrichtung übersteuert, sofern die Fahrregler 5 durch die Steuerleitungen 44, 45, 46 und 47 angesteuert. Die Steuerventile 53, 54, 55 und 56 werden bei Ausführung nach Fig. 3 elektromagnetisch angesteuert.

Die Bereichsschaltungen finden in der Regel bei Synchronlauf bzw. annäherndem Synchronlauf aller Kupplungselemente der zu schaltenden Kupplung statt. Im Hinblick auf einen weitgehend nahtlosen Bereichsübergang ist eine Kupplungsüberschneidung vorgesehen derart, daß die Folgekupplung, wie ansich bekannt, voll geschlossen ist, bevor die andere Kupplung öffnet. Bei Ausführung nach Fig. 3 sind Kupplungsventile 54, 56 vorgesehen, die diese Kupplungsüberschneidung bewirken. Wird z.B. das Steuerventil 54 über das Schaltsignal 45 angesteuert, so wird durch die Schaltmittelstellung des Schaltventiles zunächst zusätzlich die nächste Bereichskupplung bzw. Folgekupplung mit Druck beaufschlagt und zusätzlich geschlossen, wodurch infolge dieses Kupplungsdruckes ein weiteres Signal über die Druckleitung 73 auf das Steuerventil 54 ausgeübt wird und eine nächste Funktion schaltet, welche bewirkt, daß die andere Kupplung drucklos gesetzt wird und dadurch öffnen kann. Bei Rückschaltung wird das Steuersignal 45 ausgeschaltet, wodurch die Schaltung umgekehrt abläuft, indem zunächst die Mittelstellung des Ventils 54 zur Funktion kommt und wiederum zuerst die Folgekupplung mit Druck beaufschlagt und diese schließt, wonach durch diesen Kupplungsdruck das Signal über die Steuerleitung 74 zum Öffnen der anderen Kupplung ausgelöst wird, indem die linke Funktion des Ventils 54 wirksam wird. Infolgedessen, daß die Schaltungen bei Synchronlauf aller Kupplungselemente stattfinden, ist keine Druckmodulation erforderlich, d.h. die Kupplungen sind unter vollem Kupplungsdruck schaltbar. Lastabhängige Abweichungen vom Synchronlauf der Kupplungselemente beeinflussen die Schaltqualität nur unwesentlich. Durch entsprechede, gegebenenfalls lastabhängige Schaltpunktverschiebung ausgelöst, z.B. durch ein Lastsignal e, ist eine gezielte Anpassung möglich. Voraussetzung hierbei ist die Verwendung lastschaltbarer Bereichskupplungen als Lamellenkupplungen oder spezielle Formschlußkupplungen mit Abweisverzahnung nach DE - P 37 00 813.7.

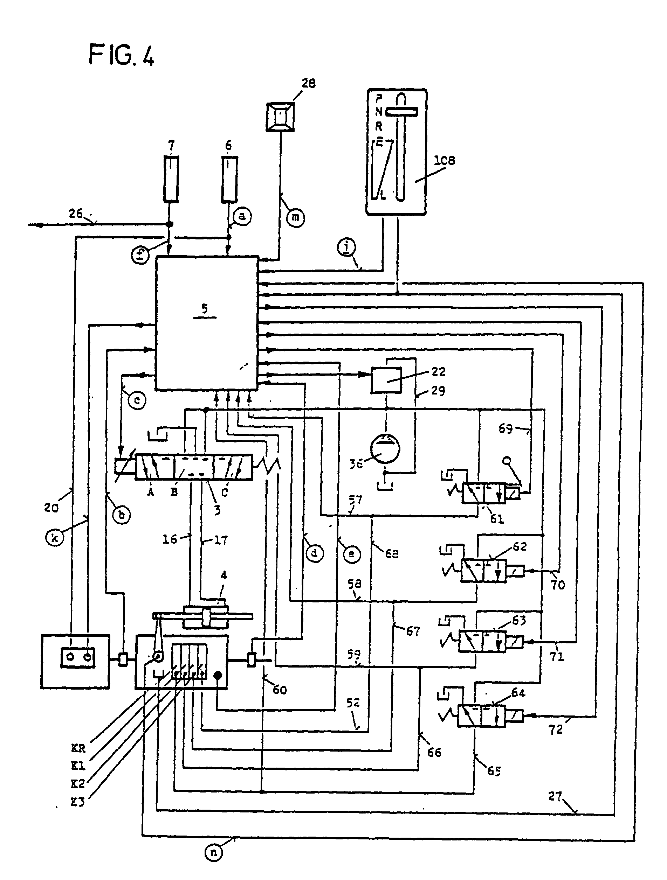

In Ausführung nach Fig. 4 wird für jede Bereichskupplung ein einfaches Kupplungsschaltventil 61, 62, 63, 64 verwendet, das vorzugsweise elektro-magnetisch betätigt wird. Über die Fahrelektronik 5 wird das jeweilige Kupplungsschaltventil angesteuert. Um die für die Schaltqualiät notwendige Kupplungsüberschneidung zu erzielen, ist das Schaltprogramm so ausgelegt, daß bei der Bereichsschaltung zunächst die Folgekupplung geschaltet wird, ebenfalls bei Synchronlauf aller Kupplungselemente und nach einem vorprogrammierten konstanten oder variablen, insbesondere von der Öltemperatur abhängigen Zeitabstand die andere Kupplung den Öffnungsimpuls erhält.

Bei Ausführung nach Fig. 4 ist jeder Bereichskupplung eine Drucksignalleitung 57, 58, 59. 60 zugeordnet, die dem Fahrgerät bzw. der Fahrelektronik 5 den jeweiligen Kupplungsdruck signalisiert, wie ansich bei lastschaltbaren Automatgetrieben bekannt. Diese Ausführung ist insbesondere für Fahrzeuge mit hohen Ansprüchen an Schaltqualität, wie bei PKW oder Bussen, der vorbeschriebenen kostengünstigeren Lösung vorzuziehen.

Bei dieser Ausführung ist eine gezielte, von der Ölviskosität unabhängige Kupplungsüberschneidung gegeben. Sobald die Folgekupplung geschlossen ist, wird durch deren Drucksignal über die Fahrelektronik 5 das Öffnungssignal der anderen Kupplung erteilt. Um beim Fahrbetrieb im Übersetzungsbereich der Bereichsschaltungen ein häufiges Aufund Abschalten zu vermeiden, ist eine Schalthysterese-Einrichtung vorgesehen, die nach einer erfolgten Bereichsschaltung eine Rückschaltung erst nach einem gewissen Zeitabstand zuläßt. Zu diesem Zweck ist die Fahrelektronik 5 so programmiert, daß ein Mindestzeitabstand zwischen den einzelnen Schaltfolgen gegeben ist. Nach den Erfahrungen ist eine zeitliche Hysterese von etwa 1 Sekunde ausreichend.

Der Schalthysterese-Effekt kann auf verschiedene Weise ausgeführt werden. Zum Beispiel ist es möglich, durch einen lastabhängigen Differenzwert, der aus dem Hochdruck des Hydrostatgetriebes resultiert, einen zeitunabghängigen Schalthysterese-Effekt zu erzeugen. Auch ein beidseitig beaufschlagbarer Verdrängungskolben mit Drosselventil kann als Hysterese-Einrichtung dienen.

### Bezugszeichenliste

- 108: Wähleinrichtung

- A: Ventilstellung
- B: Ventilstellung
- C: Ventilstellung
- a: Fahrpedalwegsignal
- b: Motordrehzahisignal
- c: Differenzsignal/Hauptregelsignal
- d: Abtriebsdrehzahlsignal
- e: Lastsignal
- f: Bremssignal
- g: Signal (nach Motorkennlinie) (moduliertes Gaspedalsignal)
- h: Sperrsignal
- i: Steuersignal
- k: Motorregelsignal (Tempomat)
- l m: Signal (Tempomat)
- n: Verstellsignal
- o: Regelsignal

- KR: R-Kupplung
- K1: 1. Bereichskupplung
- K2: 2. Bereichskupplung
- K3: 3. Bereichskupplung

- 1: Antriebsmotor
- 2: Getriebe
- 3: Hauptregelventil
- 4: Servomotor
- 5: Fahhrregler,Hauptregelgerät/Fahrelektronik
- 6: Fahrpedal
- 7: Bremspedal
- 8: Wähleinrichtung
- 9: Wählhebel
- 10: Sperrventil
- 11: Sperrschalter
- 12: Rückschlagventil
- 13: Ventilstellung
- 14: Ventilstellung
- 15: Steuerleitung
- 16: Steuerleitung
- 17: Steuerleitung
- 18: Motorkennlinienspeicher
- 20: Steuerleitung
- 21: Motorregler
- 22: Druckmodulator
- 23: Beschleunigungsventil
- 24: Antriebswelle
- 25: Abtriebsweile
- 26: Bremsleitung
- 27: Schaltleitung (Parksperre u.a.)
- 28: Wähleinrichtung (Tempomat)
- 29: Bypaßleitung
- 30: Steuer-u. Regelgerät
- 31: Wechselventil
- 32: Speisedruck
- 33: Rücklaufleitung
- 34: Zulaufleitung
- 35: Übersetzungssperreinrichtung
- 36: Speisepumpe
- 37: Zulaufleitung
- 38: Zulaufleitung
- 39: Verzögerungseinrichtung
- 41: Steuerleitung (Wechselventil)
- 42: Steuerleitung (Wechselventil)
- 43: Steuerleitung (Wechselventil R-B.)
- 44: Schaltsignal
- 45: Schaltsignai
- 46: Schaltsignal
- 47: Schaltsignal
- 48: Steuersignal
- 49: Steuersignal
- 50: Steuersignal
- 51: Steuersignal
- 52: Steuersignal

- 53: Schaltventil
- 54: Schaltventil
- 55: Schaltventil
- 56: Schaltventil
- 57: Drucksignal
- 58: Drucksignal
- 59: Drucksignal
- 60: Drucksignal
- 61: Schaltventil
- 62: Schaltventil
- 63: Schaltventil
- 64: Schaltventil
- 65: Druckleitung
- 66: Druckleitung
- 67: Druckleitung
- 68: Druckleitung
- 69: Steuersignal
- 70: Steuersignal
- 71: Steuersignal
- 72: Steuersignal
- 73: Steuersignal
- 74: Steuersignal

## Patentansprüche

1. Regeleinrichtung für ein stufenloses hydrostatisch-mechanisches Leistungsverzweigungsgetriebe mit einem oder mehreren Fahrbereichen mit einer Einrichtung, die die Verstellgeschwindigkeit des stufenlosen Getriebes über einen Verstellzylinder (4) regelt,
**dadurch gekennzeichnet, dass** bei Beschleunigung ein oder mehrere die Motorbeschleunigung drosselnde Signale (e, g, o) auf die Verstelleinrichtung (3, 4) wirken, wobei die Änderungsgeschwindigkeit der Getriebe-Übersetzung von einem oder mehreren Betriebssignalen (e, b, d, a) oder einem Zeitsignal abhängig ist.

2. Regeleinrichtung nach Anspruch 1,
**dadurch gekennzeichnet, dass** die Änderungsgeschwindigkeit der Getriebe-Übersetzung vom Ausgangssignal eines Druckabnehmers (e) für den Hydrostat-Arbeitsdruck abhängig ist oder dass die Änderungsgeschwindigkeit der Übersetzung von einem Motordrehsignal (b) und/oder einem Abdrehzahlsignal (d) und/oder einem Zeitsignal und/oder einem Betätigungssignal des Fahrpedalsignales abhängig ist.

3. Regeleinrichtung nach Anspruch 1 und 2,
**dadurch gekennzeichnet, daß** der Steuer- und Versorgungsdruck des Getriebes durch ein lastabhängiges Signal (e) oder/und ein motordrehzahlabhängiges Signal (b) oder/und ein Abtriebsdrehzahl-Signal des Getriebes (d) modalierbar ist.

4. Regeleinrichtung nach Anspruch 1 und 2,
**dadurch gekennzeichnet,**
**daß** die Druckmodulation durch einen Druckmodulator (22), der als Druckregelventil ausgebildet ist, realisierbar ist.

5. Regeleinrichtung nach einem der Ansprüche 1 bis 4,
**dadurch gekennzeichnet,**
**daß** ein lastabhängiges Signal (e,g), z.B. mittels eines Druckaufnehmers für den Hydrostrat-Arbeitsdruck vorgesehen ist, und daß das Verstellorgan in Abhängigkeit von dem Ausgangssignal(en) des oder der Aufnehmer für lastabhängig Signale kontinuierlich mit einer Änderungsgeschwindigkeit verstellt wird, die von dem Ausgangssignal des Druckaufnehmers für den Hydrostat-Arbeitsdruck abhängt.

6. Regeleinrichtung nach einem der Ansprüche 1 bis 4,
**dadurch gekennzeichnet,**
**daß** eine Beschleunigungseinrichtung vorgesehen ist, die die Verstellgeschwindigkeit des stufenlosen Getriebes derart regelt, daß bei Beschleunigung ein oder mehrere die Motorbeschleunigung drosselnde Signale (e,g,o) auf eine Verstelleinrichtung (3,4) wirken und daß nach einem Bremsvorgang die Verstelleinrichtung bei Schubbetrieb des Motors, d.h. bei Auftreten eines Bremsmomentes am Motor das Getriebe (2) zum Verstellen in Richtung kleiner Übersetzung gehindert bzw. gehemmt wird durch eine Übersetzungssperreinrichtung (35), die sich nach Betätigen des Gaspedals bzw. Fahrpedals (6) wieder löst.

7. Regeleinrichtung nach einem
oder mehreren der Ansprüche 1 bis 6,
**dadurch gekennzeichnet,**
**daß** die Verstellgeschwindigkeit des stufenlosen Getriebes derart geregelt wird, daß bei Beschleunigung ein oder mehrere die Motorbeschleunigung drosselnde Signale (e,g,o) auf die Verstelleinrichtung (3,4) wirken, daß ein Lastsignal (e) oder/und ein Motordrehzahlsignal (b) die Steuerdrücke und Versorgungsdrücke des Getriebes über einen Druckmodulator (22) moduliert und daß eine Einrichtung zur Fahrleistungssteigerung vorgesehen ist, die durch Vorwahl des Fahrers anspricht und über Signale aus einem vorprogrammierten konstanten oder variablen Wert die Motordrehzahl bereits vor Abruf einer hohen Leistung anhebt.

8. Regeleinrichtung nach einem oder mehreren der Ansprüche 1 bis 7,
**dadurch gekennzeichnet,**
**daß** eine Beschleunigungseinrichtung vorgesehen ist, die die Verstellgeschwindigkeit des stufenlosen Getriebes derart regelt, daß bei Beschleunigung ein oder mehrere die Motorbeschleunigung drosselnde Signale (e, g, o) auf die Verstelleinrichtung (3, 4) wirken, und daß eine Geschwindigkeitsregeleinrichtung (28, 30 bzw. 28, 5) vorgesehen ist, die je nach getroffener Wahl des Fahrers eine konstante Fahrgeschwindigkeit des Fahrzeugs aufrecht erhält, indem über einen Soll-Istwertvergleich zwischen einem Abtriebsdrehzahlsignal (d) und einem Signal, das der vorgewählten Geschwindigkeit entspricht, dem Antriebsmotor (1) das entsprechende Regelsignal (k) zugeht, so daß automatisch durch den Motorregler (21) die entsprechende Antriebsleistung im Rahmen der Maximalleistung des Motors abgerufen wird.

9. Regeleinrichtung nach einem oder mehreren der Ansprüche 1 bis 8,
**dadurch gekennzeichnet,**
**daß** eine Übersetzungssperreinrichtung (35) vorgesehen ist, die nach dem Bremsvorgang eine Getriebeverstellung in Richtung kleiner Übersetzung verhindert, so lange kein weiteres Fahrersignal z.B. durch Betätigen des Fahrpedals (6) erfolgt, daß die Übersetzungssperreinrichntung (10, 11, 12) durch ein Bremssignal (f) und das Fahrpedalsignal (a) angesteuert wird, daß der Übersetzungssperreffekt durch ein Signal (f), das durch Loslassen der Bremse ausgelöst wird, einsetzt,
**daß** bei Betätigen des Fahrpedals (6) die Übersetzungssperrfunktion aufhebbbar ist,
**daß** die Übersetzungssperre nur in eine Verstellrichtung wirkt,
**daß** die Übersetzungssperreinrichtung (35) aus einem Sperrventil (10) und einem Rückschlagventil (12) besteht, daß das Übersetzungssperrventil (10) von einem Sperrschalter (11) angesteuert wird, der mit einem Bremssignal (f) und dem Fahrpedalsignal (a) in Wirkverbindung steht,
**daß** die Übersetzungssperreinrichtung alternativ durch ein Signal angesteuert wird, das aus der Motordrehzahl resultiert, derart, daß die Motordrehzahl hochgehalten wird, um entsprechendes Bremsmoment zu erzeugen.

10. Regeleinrichtung nach einem oder mehreren der Ansprüche 1 bis 9,
**dadurch gekennzeichnet,**
**daß** bei Schubbetrieb im Fahrregler (5) das Motordrehzahlsignal (b) mit einer vorprogrammierten Motordrehzahlgröße z.B. Motordrehzahlkurve, die in Abhängigkeit mit motorspezifischen und akustisch akzeptablen Bremswerten steht, verglichen und entsprechend das Differenzsignal (c) beeinflußt wird, sodaß über die Verstelleinrichtung (3, 4) eine automatische Anpassung an die vorprogrammierten Werte erfolgt;
**daß** im Schubbetrieb das Differenzeignal (c) zusätzlich durch ein Lastsignal (e) beeinflußt wird, das verhindert, daß unangenehme Motorbremseffekte und Motorgeräusche durch Motorauftouren auftreten.

11. Regeleinrichtung nach einem oder mehreren der Ansprüche 1 bis 10,
**dadurch gekennzeichnet,**
**daß** der Druckmodulator (22) als Druchregelventil ausgebildet ist, der neben dem Tastsignal (e) durch ein Motordrehzahlsignal (b) oder / und ein Abtriebsdrehzahlsignal beeinflußt wird.

12. Regeleinrichtung nach einem oder mehreren Ansprüchen 1 bis 11,
**dadurch gekennzeichnet,**
**daß** ein Motorkennlinienspeicher (18) vorgesehen ist, der zwischen Motorregler (21) und Fahrpedal (6) oder in der Getrieberegeleinrichtung direkt angeordnet ist und entsprechend die Verstellsignale (g oder c) zur Verbrauchsoptimierung beeinflußt, daß ein Ersatzprogramm für spontan abrufbare Maximalleistung vorgesehen ist, die vom Fahrer vorwählbar ist, daß die Wähleinrichtung zum Vorwählen des Ersatzprogrammes in der Hauptwähleinrichtung (8) mitenthalten ist, wodurch z.B. durch Betätigung des Wählhebels (8) die entsprechende Vorwahl ausgelöst werden kann, daß nach einmaligem Abruf des Ersatzprogrammes bzw. des leistungsorientierten Programmes automatisch eine Umschaltung in das Normalprogramm für verbrauchsoptimalen Betrieb erfolgt, und zwar dadurch, daß die vom Fahrer eingegebenen entsprechenden Signale gelöscht werden, daß das Ersatzprogramm die Motordrehzahl nach ausgelöster Vorwahl anhebt durch entsprechende Übersetzungsänderung, indem die Regelsignale bzw. das Differenzeignal (c) die Getriebeübersetzung entsprechend ändern.

13. Regeleinrichtung nach einem oder mehreren der Ansprüche 1 bis 12,
**dadurch gekennzeichnet,**
**daß** die Geschwindigkeitsregeleinrichtung für Konstantfahrt eine Wähleinrichtung (28) besitzt, die durch Knopfdruck oder entsprechender Betätigung des Fahrers ein Konstantfahrtsignal (m) auslöst, was als Basis für die Leistungsregelung zur Einhaltung der gewählten Geschwindigkeit dient, daß die Konstantfahrtregelung aufgehoben bzw. übersteuert wird, dadurch,
a) daß der Fahrer die Konstantfahrtregelung ausschaltet oder einen anderen Geschwindigkeitswunsch eingibt über die Wähleinrichtung (28),
b) daß das Leistungsangebot des Motors überschritten wird,
c) daß der Fahrer durch Betätigen des Gaspedals bzw. Fahrpedals (6) höhere Geschwindigkeit fordert
d) daß durch zu starke Verzögerung des Fahrzeugs z.B. durch eine extreme Steigung die Fahrregelung überfordert wird,
e) daß durch Betätigen des Bremspedals die Geschwindigkeit reduziert wird,
**daß** die zuletzt gespeicherte Geschwindigkeit abrufbar ist durch entsprechende Betätigung an der Wähleinrichtung (28) .

14. Regeleinrichtung nach einem oder mehreren der Ansprüche 1 bis 13,
**dadurch gekennzeichnet,**
**daß** der motorseitige Bremsanteil lastabhängig und motordrehzahlabhängig dosiert wird und zwar derart, daß durch ein Begrenzungssignal eine vorgegebene Motordrehzahlgröße in Zusammenhang mit einem akzeptablen Motorgeräusch begrenzt wird.

15. Regeleinrichtung nach einem oder mehreren der Ansprüche 1 bis 14,
**dadurch gekennzeichnet,**
**daß** in der Verstellgeschwindigkeitsregelung eine vorgegebene Motordrehzahlkurve über den Zeitparameter gespeichert ist, wobei der Zeitparameter durch eine Dämpfungeeinrichtung oder durch unterschiedliche Zeitparameter in Abhängigkeit zur Fahrpedalstellung bzw. Bewegungsgeschwindigkeit des Fahrpedals gesteuert wird.

16. Regeleinrichtung nach einem oder mehreren der Ansprüche 1 bis 15,
**dadurch gekennzeichnet,**
**daß** eine Hysterese-Einrichtung eingebaut bzw. einprogrammiert ist, die durch ein Schaltsignal innerhalb der Bereicheschaltung angesteuert wird und zeitabhängig oder/und lastabhängig eine Bereichsschaltung verhindert.

## Claims

1. Control device for a continuously variable hydrostatic-mechanical power distribution transmission having one or more operating ranges comprising a device, which controls the variation speed of the continuously variable transmission by means of a variable displacement cylinder (4),
**characterized in that** upon acceleration one or more signals (e, g, o), which derate the engine acceleration, act upon the variation device (3, 4), wherein the rate of change of the transmission ratio is a function of one or more operating signals (e, b, d, a) or a time signal.

2. Control device according to claim 1,
**characterized in that** the rate of change of the transmission ratio is a function of the output signal of a pressure pick-up (e) for the hydrostatic unit working pressure or that the rate of change of the transmission ratio is a function of an engine speed signal (b) and/or an output speed signal (d) and/or a time signal and/or an actuation signal of the accelerator pedal signal.

3. Control device according to claim 1 and 2,
**characterized in that** the control- and supply pressure of the transmission is capable of modulation by means of a load-dependent signal (e) or/and an engine speed-dependent signal (b) or/and an output speed signal of the transmission (d).

4. Control device according to claim 1 and 2,
**characterized in that** the pressure modulation is realizable by means of a pressure modulator (22), which takes the form of a pressure control valve.

5. Control device according to one of claims 1 to 4,
**characterized in**
**that** a load-dependent signal (e, g) is provided e.g. by means of a pressure sensor for the hydrostatic unit working pressure, and that as a function of the output signal(s) of the sensor(s) for load-dependent signals the variation organ is varied continuously at a rate of change, which is a function of the output signal of the pressure sensor for the hydrostatic unit working pressure.

6. Control device according to one of claims 1 to 4,
**characterized in**
**that** an acceleration device is provided, which controls the variation speed of the continuously variable transmission in such a way that upon acceleration one or more signals (e, g, o), which derate the engine acceleration, act upon a variation device (3, 4) and that after a braking operation the variation device upon deceleration of the engine, i.e. in the event of a braking torque at the engine, the transmission (2) is prevented and/or inhibited from variation in the direction of a low gear ratio by means of a speed transformation blocking device (35), which disengages after actuation of the throttle-and/or accelerator pedal (6).

7. Control device according to one or more of claims 1 to 6,
**characterized in**
**that** the variation speed of the continuously variable transmission is controlled in such a way that upon acceleration one or more signals (e, g, o), which derate the engine acceleration, act upon the variation device (3, 4), that a load signal (e) or/and an engine speed signal (b) modulates the control pressures and supply pressures of the transmission by means of a pressure modulator (22) and that a device for increasing the vehicle performance is provided, which operates through preselection of the driver and even before a high performance is requested raises the engine speed via signals from a pre-programmed constant or variable value.

8. Control device according to one or more of claims 1 to 7,
**characterized in**
**that** an acceleration device is provided, which controls the variation speed of the continuously variable transmission in such a way that upon acceleration one or more signals (e, g, o), which derate the engine acceleration, act upon the variation device (3, 4), and that a speed control device (28, 30 and/or 28, 5) is provided, which depending on the selection made by the driver maintains a constant travelling speed of the vehicle in that by means of a setpoint/actual-value comparison between an output speed signal (d) and a signal corresponding to the preselected speed the appropriate control signal (k) reaches the engine (1) so that automatically by means of the engine controller (21) the appropriate input power for maximum engine performance is requested.

9. Control device according to one or more of claims 1 to 8,
**characterized in**
**that** a speed transformation blocking device (35) is provided, which after the braking operation prevents a transmission variation in the direction of a low gear ratio so long as no further driver signal ensues, e.g. through actuation of the accelerator pedal (6), that the speed transformation blocking device (10, 11, 12) is activated by a braking signal (f) and the accelerator pedal signal (a), that the speed transformation blocking effect is initiated by a signal (f), which is triggered by release of the brake,
**that** upon actuation of the accelerator pedal (6) the speed transformation blocking function is cancellable, that the speed transformation block is effective in one variation direction only,
**that** the speed transformation blocking device (35) comprises a shut-off valve (10) and a non-return valve (12),
**that** the speed transformation shut-off valve (10) is activated by a blocking switch (11), which is workingly connected to a braking signal (f) and the accelerator pedal signal (a),
**that** the speed transformation blocking device is alternatively activated by a signal resulting from the engine speed, such that the engine speed is kept high in order to generate corresponding braking torque.

10. Control device according to one or more of claims 1 to 9,
**characterized in**
**that** upon deceleration in the drive controller (5) the engine speed signal (b) is compared to a pre-programmed engine speed quantity e.g. engine speed curve, which is in a dependent relationship to engine-specific and acoustically acceptable braking values, and in a corresponding manner the differential signal (c) is influenced, so that by means of the variation device (3, 4) an automatic adaptation to the pre-programmed values is effected;
**that** during deceleration the differential signal (c) is additionally influenced by a load signal (e), which prevents the occurrence of unpleasant engine braking effects and engine noises as a result of revving-up of the engine.

11. Control device according to one or more of claims 1 to 10,
**characterized in**
**that** the pressure modulator (22) takes the form of a pressure control valve, which is influenced not only by the sampling signal (e) but also by an engine speed signal (b) or/and an output speed signal.

12. Control device according to one or more of claims 1 to 11,
**characterized in**
**that** an engine characteristics memory (18) is provided, which is disposed between engine controller (21) and accelerator pedal (6) or directly in the transmission control device and suitably influences the variation signals (g or c) to optimize consumption, that an alternative program for spontaneously requestable maximum performance is provided, which is preselectable by the driver, that the selector device for preselecting the alternative program is simultaneously included in the main selector device (8), with the result that e.g. through actuation of the selector lever (8) the corresponding preselection may be initiated, that after the alternative program and/or the performance-oriented program has been requested once, there is automatically a changeover to the normal program for consumption-optimized operation, namely in that the corresponding signals input by the driver are deleted, that after preselection has been initiated the alternative program raises the engine speed by means of a corresponding change of the gear ratio in that the control signals and/or the differential signal (c) correspondingly change the transmission ratio.

13. Control device according to one or more of claims 1 to 12,
**characterized in**
**that** the speed control device for constant travel possesses a selector device (28), which by pressing a button or by suitable actuation of the driver triggers a constant travel signal (m), which is used as the basis for the power control for maintaining the selected speed, that cancelling and/or overriding of the constant travel control is effected in that
a) the driver switches off the constant travel control or inputs a different speed request via the selector device (28),
b) the power supply of the engine is exceeded,
c) the driver by actuating the throttle pedal and/or accelerator pedal (6) requests a higher speed
d) the drive control system is overtaxed by excessive deceleration of the vehicle e.g. owing to an extreme up-hill gradient,
e) the speed is reduced by actuating the brake pedal,
**that** the speed last stored is requestable by corresponding actuation at the selector device (28).

14. Control device according to one or more of claims 1 to 13,
**characterized in**
**that** the engine-side braking fraction is metered as a function of load and engine speed, namely in such a way that by means of a limiting signal a preset engine speed quantity is limited in connection with an acceptable engine noise.

15. Control device according to one or more of claims 1 to 14,
**characterized in**
**that** in the variation speed control system a preset engine speed curve over the time parameter is stored, wherein the time parameter is controlled by means of a damping device or by means of different time parameters as a function of the accelerator pedal position and/or the speed of motion of the accelerator pedal.

16. Control device according to one or more of claims 1 to 15,
**characterized in**
**that** a hysteresis device is built in and/or programmed in, which is activated by a switching signal within the range shift device and prevents a range shift in a time- or/and load-dependent manner.

## Revendications

1. Dispositif de réglage pour une transmission à réglage continu hydrostatique-mécanique de branchement de couple avec une ou plusieurs autonomies avec un dispositif qui règle la vitesse de déplacement de la transmission à réglage continu via un cylindre de déplacement (4), **caractérisé en ce que** lors de l'accélération, un ou plusieurs signaux (e, g, o) réduisant l'accélération du moteur agissent sur le dispositif de déplacement (3,4), moyennant quoi la vitesse de croissance de la transformation de vitesse de la transmission dépend d'un ou plusieurs signaux de fonctionnement (e, b, d, a) ou d'un signal horaire.

2. Dispositif de réglage selon la revendication 1, **caractérisé en ce que** la vitesse de croissance de la transformation de vitesse de la transmission dépend du signal de sortie d'un consommateur de pression (e) pour la pression de fonctionnement hydrostatique, ou **en ce que** la vitesse de croissance de la transformation de la vitesse dépend d'un signal de régime du moteur (b) et/ou d'un signal de vitesse de tournage (d) et/ou d'un signal horaire et/ou d'un signal d'actionnement du signal de la pédale de l'accélérateur.

3. Dispositif de réglage selon les revendications 1 et 2, **caractérisé en ce que** la pression motrice et d'alimentation de la transmission peut être modulée par un signal asservi à la charge (e) et/ou un signal asservi au régime du moteur (b) et/ou un signal de vitesse de réduction de la transmission (d).

4. Dispositif de réglage selon les revendications 1 et 2, **caractérisé en ce que** la modulation de la pression peut être réalisée à l'aide d'un modulateur de pression (22) réalisé en tant que soupape de réglage de la pression.

5. Dispositif de réglage selon l'une quelconque des revendications 1 à 4, **caractérisé en ce qu'**un signal asservi à la charge (e, g) est prévu à l'aide par exemple d'un capteur de pression pour la pression de fonctionnement hydrostatique, et **en ce que** l'organe de déplacement est déplacé de manière continue avec une vitesse de croissance en fonction du/des signal/aux de sortie du ou des capteur(s) pour signaux asservis à la charge, laquelle vitesse de croissance dépend du signal de sortie du capteur de pression pour la pression de fonctionnement hydrostatique.

6. Dispositif de réglage selon l'une quelconque des revendications 1 à 4, **caractérisé en ce qu'**un dispositif d'accélération est prévu, lequel règle la vitesse de déplacement de la transmission à réglage continu de manière à ce qu'avec une accélération, un ou plusieurs signaux (e, g, o) réduisant l'accélération du moteur agissent sur un dispositif de déplacement (3, 4) et qu'après un processus de freinage le dispositif de déplacement, en cas de fonctionnement avec poussée du moteur, c'est-à-dire en cas d'apparition d'un couple de freinage du moteur, la transmission (2) est empêchée et/ou gênée pour le déplacement en direction d'une faible transformation de la vitesse grâce à un dispositif de blocage de la transformation de la vitesse (35), lequel se libère à nouveau suite à l'actionnement de la pédale de l'accélérateur et/ou d'accélération (6).

7. Dispositif de réglage selon l'une quelconque ou plusieurs des revendications 1 à 6, **caractérisé en ce que** la vitesse de déplacement de la transmission à réglage continu est réglée de manière à ce que avec une accélération, un ou plusieurs signaux (e, g, o) réduisant l'accélération du moteur agissent sur le dispositif de déplacement (3, 4), **en ce qu'**un signal de charge (e) et/ou un signal de régime du moteur (b) module les pressions de commande et les pressions d'alimentation de la transmission via un modulateur de pression (22), et **en ce qu'**un dispositif pour l'augmentation de la prestation kilométrique est prévu, lequel répond à la présélection du conducteur et élève le régime du moteur dès avant l'appel d'une prestation élevée via des signaux à partir d'une valeur constante ou variable programmée à l'avance.

8. Dispositif de réglage selon l'une quelconque ou plusieurs des revendications 1 à 7, **caractérisé en ce que** un dispositif d'accélération est prévu, lequel règle la vitesse de déplacement de la transmission à réglage continu de manière à ce qu'avec une accélération, un ou plusieurs signaux (e, g, o) réduisant l'accélération du moteur agissent sur le dispositif de déplacement (3, 4), et **en ce qu'**un dispositif de réglage de la vitesse (28, 30 et/ou 28, 5) est prévu, lequel maintien une vitesse de marche constante du véhicule en fonction du choix effectué par le conducteur **en ce que** via une comparaison entre une valeur théorique et réelle entre un signal de vitesse de réduction (d) et un signal correspondant à la vitesse présélectionnée, le moteur de commande (1) reçoit le signal de réglage (k) correspondant, de sorte que grâce au mécanisme de réglage du moteur (21), la puissance de propulsion correspondante est automatiquement appelée dans le cadre de la puissance maximale du moteur.

9. Dispositif de réglage selon l'une quelconque ou plusieurs des revendications 1 à 8, **caractérisé en ce qu'**un dispositif de blocage de la transformation de la vitesse (35) est prévu, lequel empêche, suite au processus de freinage, un déplacement de la transmission en direction d'une faible transformation de la vitesse tant qu'il n'y a pas d'autre signal de conduite par exemple par actionnement de la pédale de l'accélérateur (6), **en ce que** le dispositif de blocage de la transformation de la vitesse (10, 11, 12) est amorcé par un signal de freinage (f) et le signal de la pédale de l'accélérateur (a), **en ce que** l'effet de blocage de la transformation de la vitesse a lieu grâce à un signal (f) qui est déclenché en lâchant le frein, **en ce que** lors de l'actionnement de la pédale d'accélération (6) il est possible d'annuler le fonctionnement du blocage de la transformation de la vitesse **en ce que** le blocage de la transformation de la vitesse agit uniquement dans une direction de déplacement, **en ce que** le dispositif de blocage de la transformation de la vitesse (35) se compose d'une valve d'arrêt (10) et d'un clapet antiretour (12), **en ce que** la valve d'arrêt de la transformation de la vitesse (10) est amorcée par un verrou commutateur (11) en relation active avec un signal de freinage (f) et le signal de la pédale de l'accélérateur (a), **en ce que** le dispositif de blocage de la transformation de la vitesse est amorcé en alternative par un signal résultant du régime du moteur, de sorte que le régime du moteur est maintenu élevé afin de générer un couple de freinage correspondant.

10. Dispositif de réglage selon l'une quelconque ou plusieurs des revendications 1 à 9, **caractérisé en ce que** avec un fonctionnement avec poussée, le signal de régime du moteur (b) est comparé dans le régulateur de conduite (5) avec une grandeur du régime du moteur programmée à l'avance, par exemple une courbe du régime du moteur, laquelle est fonction de valeurs de freinage spécifiques au moteur et acceptables du point de vue acoustique, et **en ce que** le signal de la différence est influencé de manière correspondante, de sorte que via le dispositif de déplacement (3, 4), il s'ensuit une adaptation automatique aux valeurs programmées à l'avance; **en ce que** avec un fonctionnement avec poussée, le signal de la différence (c) est additionnellement influencé par un signal de charge (e), lequel empêche que des effets désagréables de freinage du moteur et de bruits du moteur surgissent en raison de la prise de vitesse du moteur.

11. Dispositif de réglage selon l'une quelconque ou plusieurs des revendications 1 à 10, **caractérisé en ce que** le modulateur de pression (22) est réalisé en tant que soupape de réglage de la pression laquelle est influencée, mis à part le signal palpeur (e), par un signal de régime du moteur (b) et/ou un signal de vitesse de réduction.

12. Dispositif de réglage selon l'une quelconque ou plusieurs des revendications 1 à 11, **caractérisé en ce qu'**une mémoire de la caractéristique statique du moteur (18) est prévue, laquelle est disposée entre le mécanisme de réglage du moteur (21) et la pédale d'accélération (6) ou directement dans le dispositif de réglage de la transmission, et laquelle influence de manière correspondante les signaux de déplacement (g ou c) pour l'optimisation de la consommation, **en ce qu'**un programme de remplacement est prévu pour l'appel spontané d'une puissance maximale pouvant être présélectionnée par le conducteur, **en ce que** le dispositif de sélection pour la présélection du programme de remplacement est contenu avec dans le dispositif de sélection principal (8), moyennant quoi par exemple en actionnant le levier de sélection (8), la présélection correspondante peut être déclenchée, **en ce qu'**après un appel unique du programme de remplacement et/ou du programme orienté vers la puissance, il s'ensuit automatiquement un basculement vers le programme normal pour un fonctionnement optimal de consommation, et ce **en ce que** les signaux correspondants saisis par le conducteur sont effacés, **en ce que** le programme de remplacement élève le régime du moteur après l'effacement de la présélection grâce à une modification correspondante de la transformation de la vitesse **en ce que** les signaux de réglage et/ou le signal de la différence (c) modifient de manière correspondante la transformation de la vitesse de la transmission.

13. Dispositif de réglage selon l'une quelconque ou plusieurs des revendications 1 à 12, **caractérisé en ce que** le dispositif de réglage de la vitesse pour une conduite constante possède un dispositif de sélection (28) déclenchant un signal de conduite constante (m) par pression d'un bouton ou par actionnement correspondant du conducteur, lequel sert de base pour le réglage de la puissance pour maintenir la vitesse sélectionnée, **en ce que** le réglage de conduite constante est annulé et/ou surrégulé **en ce que** :
a) le conducteur déconnecte le réglage de la conduite constante, ou saisit un autre souhait de vitesse via le dispositif de sélection (28),
b) l'offre de puissance du moteur est dépassée,
c) le conducteur exige une vitesse plus élevée en actionnant la pédale d'accélération et/ou la pédale de l'accélérateur (6),
d) à cause d'une décélération trop importante du véhicule par exemple en raison d'une montée trop extrême, le réglage de la conduite est sollicité de manière excessive,
e) avec l'actionnement de la pédale de freinage, la vitesse est réduite,
la vitesse enregistrée en dernier peut être appelée grâce à un actionnement correspondant sur le dispositif de sélection (28).

14. Dispositif de réglage selon l'une quelconque ou plusieurs des revendications 1 à 13, **caractérisé en ce que** la part de freinage du côté du moteur est asservie à la charge et est dosée de manière asservie au régime du moteur, et ce de manière à ce qu'avec un signal de délimitation, une grandeur prédéfinie du régime du moteur est limitée en rapport avec un bruit du moteur acceptable.

15. Dispositif de réglage selon l'une quelconque ou plusieurs des revendications 1 à 14, **caractérisé en ce que** dans le mécanisme de réglage de la vitesse de déplacement, une courbe imposée du régime du moteur est stockée en mémoire via le paramètre horaire, moyennant quoi le paramètre horaire est commandé grâce à un dispositif d'atténuation ou grâce à des paramètres horaires différents en fonction de la position de la pédale de l'accélérateur et/ou de la vitesse de déplacement de la pédale de l'accélérateur.

16. Dispositif de réglage selon l'une quelconque ou plusieurs des revendications 1 à 15, **caractérisé en ce qu'**un dispositif d'hystérésis est incorporé et/ou programmé, lequel est amorcé via un signal de commutation dans la commutation de domaine, et qui empêche une commutation de domaine en fonction du temps et/ou en fonction de la charge.
